(19) Europäisches Patentamt
European Patent Office
Office européen des brevets

(11) **EP 2 470 406 B1**

(12) **EUROPEAN PATENT SPECIFICATION**

(45) Date of publication and mention
of the grant of the patent:
**21.10.2020 Bulletin 2020/43**

(51) Int Cl.:
*B60W 30/14* *(2006.01)*     *B60K 31/00* *(2006.01)*
*G05B 13/04* *(2006.01)*     *B60W 30/16* *(2020.01)*

(21) Application number: **10812402.5**

(86) International application number:
**PCT/SE2010/050903**

(22) Date of filing: **23.08.2010**

(87) International publication number:
**WO 2011/025443 (03.03.2011 Gazette 2011/09)**

(54) **SYSTEM AND METHOD FOR MAINTAINING DRIVING TIMES**

SYSTEM UND VERFAHREN ZUR AUFRECHTERHALTUNG VON BETRIEBSZEITEN

SYSTÈME ET PROCÉDÉ DE MAINTIEN DES TEMPS DE CONDUITE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.08.2009 SE 0950603**

(43) Date of publication of application:
**04.07.2012 Bulletin 2012/27**

(73) Proprietor: **Scania CV AB**
**151 87 Södertälje (SE)**

(72) Inventors:
• **JOHANSSON, Oskar**
**S-112 19 Stockholm (SE)**
• **HANSSON, Jörgen**
**S-129 42 Hägersten (SE)**
• **PETTERSSON, Henrik**
**S-141 73 Segeltorp (SE)**

(74) Representative: **Scania CV AB**
**Patents, GP 117kv**
**151 87 Södertälje (SE)**

(56) References cited:
WO-A1-01/15927     WO-A2-2008/152287
DE-A1- 10 162 866     US-A- 6 076 036
US-A1- 2005 055 157

• ANDERS FRÖBERG ET AL: "Explicit Fuel Optimal
Speed Profiles for Heavy Trucks on a Set of
Topographic Road Profiles", SAE TECHNICAL
PAPER SERIES, vol. 1, 3 April 2006 (2006-04-03),
XP055452791, US ISSN: 0148-7191, DOI:
10.4271/2006-01-1071
• HELLSTROM E ET AL: "Look-ahead control for
heavy trucks to minimize trip time and fuel
consumption", CONTROL ENGINEERING
PRACTICE, PERGAMON PRESS, OXFORD, GB,
vol. 17, no. 2, 1 February 2009 (2009-02-01), pages
245-254, XP025801215, ISSN: 0967-0661, DOI:
10.1016/J.CONENGPRAC.2008.07.005 [retrieved
on 2008-08-15]
• Erik Hellström: "Explicit use of road topography
for model predictive cruise control in heavy
trucks", , 21 February 2005 (2005-02-21),
XP055560279, Retrieved from the Internet:
URL:http://www.diva-portal.org/smash/get/d
iva2:20186/FULLTEXT01.pdf [retrieved on
2019-02-21]

## Description

Field of the invention

The present invention relates to a system and a method for maintaining driving times according to the introduction to the independent claims.

Background to the invention

Many vehicles today are equipped with a cruise control to make it easier for the driver to drive the vehicle. The desired speed can then be set by the driver, e.g. via a control device in the steering wheel console, and a cruise control system in the vehicle acts thereafter upon a control system so that it accelerates and brakes the vehicle in order to maintain the desired speed. If the vehicle is equipped with an automatic gear change system, the vehicle's gears are changed so that it can maintain desired speeds.

Cruise controls which vary current set-speed (the set-point value for the cruise control's speed regulator), e.g. according to the surrounding traffic situation or the topology of the road, are becoming increasingly common. There are different reasons for wishing to vary vehicle speed. The following may be cited as examples of adaptive cruise controls: AICC (Autonomous Intelligent Cruise Control), on the basis of measuring the distance from a vehicle in front, attempts to match the speed of the vehicle in which it is fitted to that of the vehicle in front. This means that if the driver tries to drive faster than the vehicle in front, AICC will limit the speed of his/her vehicle to maintain a constant time gap between them.

Scania Ecocruise ® varies the speed according to current vehicle speed and road gradient with a view to minimising fuel consumption for a given driving assignment. Ecocruise does not use information about the road ahead but instead makes certain assumptions about its nature based on information about the current stretch of road.

By varying the vehicle's speed in hilly terrain, it is therefore possible to save fuel as compared with a conventional cruise control. If an upgrade is calculated, the system accelerates the vehicle up the hill. Towards the end of the climb, the system is programmed to avoid acceleration until the gradient has levelled out at the top, provided that the vehicle's speed does not drop below a certain level. By lowering the speed at the end of an upgrade we can regain it on a subsequent downgrade without using the engine to accelerate. When the vehicle approaches the bottom of a dip, the system endeavours to use the kinetic energy to embark on the next upgrade at a higher speed than an ordinary cruise control. The system accelerates slightly at the end of the downgrade in order to maintain the vehicle's momentum. In undulating terrain, this means that the vehicle starts the next climb at a higher speed than normal. Avoiding unnecessary acceleration and utilising the vehicle's kinetic energy makes it possible to save fuel.

If the topology ahead is made known by the vehicle having map data and GPS, such a system can be made more robust and can also change the vehicle's speed in anticipation. An example of such a system is:
"Look-Ahead", a system that uses GPS (Global Positioning System) and a map database containing information about, for example, road gradients, bend radii, speed limits, etc. The GPS position can be used to detect the vehicle's location and direction of movement. Information about the nature of the road ahead can then be generated from the map database and be used to vary/optimise the vehicle speed so as to achieve a safe and comfortable speed at bends and minimise fuel consumption.

A problem with this type of cruise control is that varying the speed of the vehicle also affects the time taken to drive a given distance as compared with an "ordinary" traditional cruise control which attempts to maintain a constant speed selected by the driver.

Cruise controls that attempt to minimise fuel consumption (Ecocruise, Look-Ahead etc., referred to below as ECC, Economic Cruise Control) have a greater influence on the average speed than an "ordinary" cruise control, assuming of course that the same set-speed is preselected.

The consequences of the driving time not being the same are not usually a problem, but time differences that are too great may be a cause of irritation for the driver. If they also result in the average speed with ECC being higher than with conventional non-adaptive cruise control, the fuel saving will be cancelled out by the increased speed. This may lead to the driver drawing the incorrect conclusion that the adaptive cruise control does not deliver the promised saving.

WO 2005/062276 refers to a system for a vehicle whereby the average speed is compared with limit values indicated for desired average speed for the run concerned. The location of the vehicle is included in the comparison. However, this system is intended to help the driver maintain the recommended speed during a run on which he/she wishes to avoid having to stop because of red lights.

KR 1020070066168 refers to a method for calculating the exact average speed of a vehicle from starting point to destination. The actual driving time is calculated by subtracting standstill times from the total driving time. However, there is no mention of whether the vehicle is under cruise control.

Froberg et al, "Explicit Fuel Optimal Speed Profiles for Heavy Trucks on a Set of Topographic Road Profiles", SAE Technical Paper Series, vol. 1, 3 April 2006, discusses the problem how to drive a heavy truck over various road topographies such that the fuel consumption is minimized. By means of a model of the truck powertrain, an optimisation problem is formulated and speed profiles to solve the problem are identified.

In Hellstrom et al, "Look-ahead control for heavy trucks to minimize trip time and fuel consumption", Control Engineering Practice 17 (2009) 245-254, a drive mission for a heavy diesel truck is studied. Look-ahead information is used in determining a velocity trajectory with respect to a criterion formulation that weighs trip time and fuel consumption.

Hellstrom, "Explicit use of road topography for model predictive cruise control in heavy trucks", 21 February 2005, XP055560279, Retrieved from the Internet: URL: http://www.diva-portal.org/smash/get/diva2:20186/FULLTEXT01.pdf, explores how information about future road slopes can be utilised in a heavy truck with the aim at reducing the fuel consumption over a route without increasing the total travel time.

The object of the present invention is to increase the acceptance of an adaptive cruise control system in a vehicle by whoever drives the vehicle.

## Summary of the invention

According to an aspect of the invention, the object described above is achieved by an adaptive cruise control system for maintaining driving times, the system comprising a cruise control regulator for regulating the cruise control of a motor vehicle. The system for maintaining driving times further comprises:

- an input unit for indicating desired speed values $v_{set}$ for the adaptive cruise control; and
- a computing unit adapted to

  - identify a section $S_i$ of a driven run S during which the driving time is to be determined;
  - calculate the time $t_{cc}$ it would have taken to drive the section $S_i$ when using a conventional non-adaptive cruise control;
  - determine the time $t_{adapt}$ actually taken to drive the section $S_i$ with the adaptive cruise control;
  - calculate the time difference between $t_{cc}$ and $t_{adapt}$;
  - calculate an adjusted control signal $v_{setkorr}$ to be used as control signal to the cruise control regulator so that said time difference disappears as the vehicle continues its journey; $v_{setkorr}$ being used as control signal to the adaptive system's cruise control regulator.

The object of the invention is achieved according to another aspect by an adaptive cruise control method for maintaining driving times of a motor vehicle whose control system is regulated by a cruise control regulator, said method comprising the steps of:

  A) indicating desired speed values $v_{set}$ for the adaptive cruise control;
  B) identifying a section $S_i$ of a driven run S during which the driving time is to be determined;
  C) calculating the time $t_{cc}$ it would have taken to drive the section $S_i$ when using a conventional non-adaptive cruise control;
  D) determining the time $t_{adapt}$ actually taken to drive the section $S_i$ with the adaptive cruise control;
  E) calculating the time difference between $t_{cc}$ and $t_{adapt}$; and
  F) calculating an adjusted control signal $v_{setkorr}$ to be used as control signal to the cruise control regulator so that said time difference disappears as the vehicle continues its journey, $v_{setkorr}$ being used as control signal to the adaptive system's cruise control regulator.

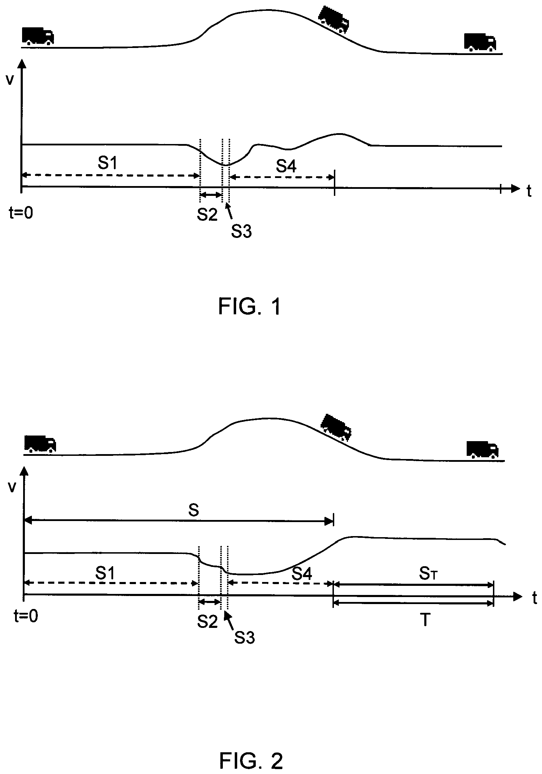

The problem described above is therefore solved, according to the present invention, by introducing an estimate of the driving time the vehicle would have achieved if the run had been driven with a traditional non-adaptive cruise control. This driving time is then compared with the driving time achieved with the ECC. If the driving times differ, the desired average speed for the ECC is adjusted to reduce the difference, see figure 2.

The difficulty with this method is in making a correct estimate of the driving time. For a light vehicle, this is trivial, since its engine capacity will in principle be sufficient to maintain the set-speed selected by the driver, and the driving time will therefore be equal to the distance divided by the set-speed.

For heavy vehicles and/or in extremely undulating terrain, this is not the case since the engine output will be insufficient to maintain the set-speed throughout the driving assignment, see figure 1. In such cases, if the set-speed selected by the driver as the average speed for the driving assignment were used as the traditional cruise control's average speed, the result would be a large over-estimate.

In the present invention, a driven run is identified on which to carry out the time comparison. According to an embodiment, the time is then calculated for those sections where the maximum available engine output was not utilised. In those cases, the average speed for the ordinary cruise control according to an embodiment may correspond to the set-speed selected by the driver. According to another embodiment, a conventional cruise control is simulated for the identified run and the time for the run is calculated. For corresponding sections, the time with ECC is then calculated. These driving times are then used to make the driving time adjustment.

By adapting the vehicle's future speed in order to absorb the time difference, the driver will not notice that the adaptive cruise control system sometimes differs in terms of time from a conventional cruise control system. Thus his/her acceptance of the adaptive cruise control system increases and he/she will hopefully continue to use it, generating the greater fuel savings provided by an adaptive cruise control system compared with a conventional cruise control system.

Preferred embodiments are described in the dependent claims and in the detailed description.

Brief description of the attached drawings

The invention is described below with reference to the attached drawings, in which:

Figure 1 depicts an example of a speed profile for a vehicle travelling over a hill under a traditional cruise control according to an embodiment of the invention.
Figure 2 depicts an example of a speed profile for a vehicle travelling over a hill under an adaptive cruise control and compensating thereafter for a time difference according to an embodiment of the invention.
Figure 3 depicts a system according to an embodiment of the invention.

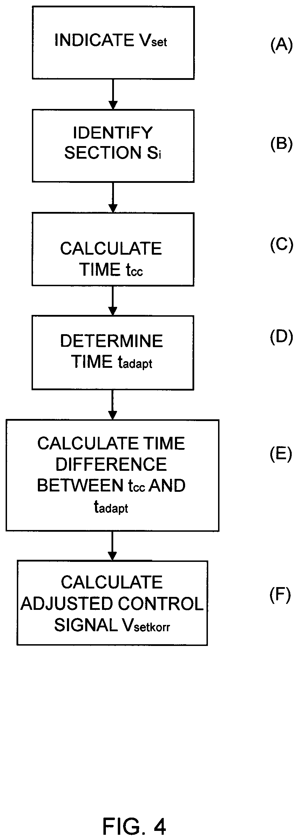

Figure 4 depicts a flowchart for the method according to an embodiment of the invention.

Detailed description of preferred embodiments of the invention

Figures 1 and 2 will now be described to explain how the invention functions according to an embodiment. Figure 1 depicts an example of how a vehicle behaves when driven with a traditional cruise control. At the top of the illustration is a road profile with a hill. Below the road profile is a graph of how the vehicle's speed changes over time as it travels over the hill. Figure 2 illustrates the behaviour of a vehicle driven with an adaptive cruise control on the same road as depicted in figure 1. In the same way as in figure 1, the bottom of figure 2 shows how the vehicle's speed changes over time as it travels over the hill. On steep upgrades such as depicted, the vehicle will not always be able to maintain desired speed, since it will be in engine output deficit. This may be due to various factors, e.g. vehicle weight, engine capacity and hill gradient. This is illustrated at subsection S2 in figure 2, where the vehicle's maximum available engine output is therefore used. Figure 2 also illustrates a subsection S3 on which the vehicle's adaptive cruise control causes its speed to drop further to avoid braking on the coming downgrade. During subsections S1, S3 and S4 the maximum available engine output is therefore not utilised. These sections are depicted in figure 1, and by calculating how much time sections S1, S3 and S4 should have taken with a traditional cruise control and comparing it with how long they took with the adaptive cruise control, a time difference is arrived at. This time difference can thereafter be eliminated by future increase or decrease in the control value to the adaptive cruise control. In the example in figure 2, the vehicle's speed is thus increased over the distance "$S_T$" or the time "T" to cause the time difference to disappear. The sections S1-S4 shown here are merely examples, and it should be appreciated that the number of sections may differ from what is depicted.

Instead of eliminating those subsections where the maximum available engine output is not sufficient to maintain the vehicle speed, the whole run S may be identified by registering information about the distance travelled. Driving with a conventional non-adaptive cruise control can thus be simulated, and the time for the whole run S in figures 1 and 2 be determined.

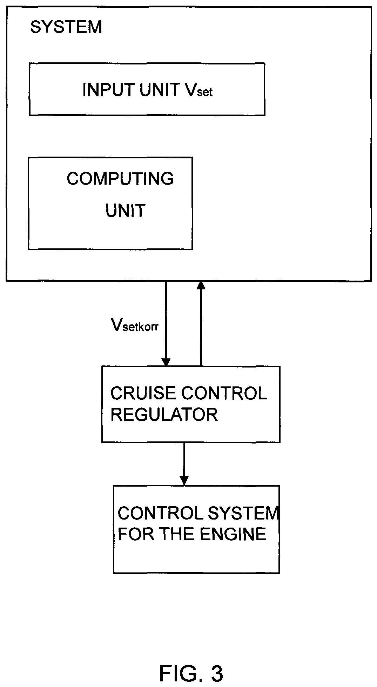

According to an embodiment illustrated in figure 3, the invention comprises a system for an adaptive cruise control comprising a cruise control regulator in a motor vehicle whose control system is regulated by the cruise control regulator. The system comprises an input unit for indicating desired speed values $v_{set}$ for the adaptive cruise control, and a computing unit. The computing unit is adapted to identify a section $S_i$ of a driven run S during which the driving time is to be determined. This identification may be made in various ways, as will be explained in more detail further on in the description. The computing unit is also adapted: to calculate the time $t_{cc}$ it would have taken to drive the section $S_i$ when using a conventional non-adaptive cruise control; to determine the time $t_{adapt}$ actually taken to drive the section $S_i$ with the adaptive cruise control; and to calculate the time difference between $t_{cc}$ and $t_{adapt}$, and calculate an adjusted control signal $v_{setkorr}$ to be used as control signal to the cruise control regulator so that said time difference disappears as the vehicle continues its journey; $v_{setkorr}$ being used as control signal for the adaptive system's cruise control regulator. The result is a system which eliminates the time difference that may arise between a traditional non-adaptive cruise control and an adaptive cruise control, thereby increasing driver acceptance of the adaptive cruise control system.

According to an embodiment, the system comprises a computing unit adapted to identify the section $S_i$ by

identifying the subsections SI-Sn of the driven run S where an engine output smaller than or equal to the maximum available engine output is sufficient to maintain the vehicle speed when using the adaptive cruise control, which section $S_i$ consists of the identified subsections S1-Sn. The subsections can be identified by, for example, measuring the distance travelled and at the same time detecting the engine output. The sections where the maximum available engine output is detected are eliminated. According to an embodiment, the computing unit is adapted to estimate the time $t_{cc}$ by integration across the identified sections SI-Sn. The time it should have taken to drive the vehicle with a traditional cruise control is thus reliably calculated.

According to another embodiment, the system is adapted to register information about the run S and the computing unit is adapted to identify the section $S_i$ by using the information about the run S. The system may for example use map data and position data to identify the driven run S, or sensors in the vehicle may continuously read road gradient, distance travelled etc. in order to provide information about the run S. In this way, the whole run S can be identified and driving with a conventional cruise control can be simulated, arriving at the total time $t_{cc}$ for the run S with a conventional cruise control.

The system is preferably adapted to be able to calculate continuously an adjusted control signal $v_{setkorr}$ to the cruise control regulator. New calculated time differences can thus be eliminated continuously as the journey proceeds, and the difference between the driving times with the different cruise controls can be kept to a minimum or may disappear entirely by the time the vehicle reaches its final destination.

Detected signals, calculated values etc. are usually sent via CAN in the vehicle. CAN (controller area network) is a serial bus system specially developed for use in vehicles. The CAN data bus enables digital data exchange between sensors, regulating components, actuators, control devices etc. and ensures that two or more control devices can have access to the signals from a given sensor in order to use them to control components connected to them.

According to an embodiment, the computing unit is adapted to calculate the adjusted control signal $v_{setkorr}$ so that the time difference $t_{diff}$ disappears over a predetermined time $t_x$. The driver or the system may for example set a desired time by which the time difference is to be eliminated. The computing unit then works out how much the adaptive system's reference speed has to increase to achieve this, and increases it by the required amount. We now cite an example of how the adjusted control signal $v_{setkorr}$ can be calculated. The time difference $t_{diff}$ may be said to correspond to a distance $S_{diff}$, so $S_{diff} = t_{diff} \cdot v_{set}$. This means that during the time $t_x$ the vehicle has to travel a distance equal to $S_s + S_{diff}$ instead of $S_s$. It is assumed that $S_s = v_{set} \cdot t_x$, so the adjusted speed should be:

$$v_{setkorr} = \frac{(S_s + S_{diff})}{t_x} = \frac{(v_{set} \cdot t_x + t_{diff} \cdot v_{set})}{t_x} = (1 + \frac{t_{diff}}{t_x}) \cdot v_{set} \qquad (1)$$

According to another embodiment, the computing unit is adapted to calculate the adjusted control signal $v_{setkorr}$ so that the time difference disappears over a predetermined distance $S_x$. The driver or the system can then, as described above, set a desired distance over which the time difference should be eliminated. The computing unit then works out how much the adaptive system's reference speed has to increase to achieve this, and increases it by the required amount. This may for example be done using the formula

$$v_{setkorr} = v_{set} + \frac{S_x}{t_{diff}} \qquad (2)$$

$v_{set}$ is therefore the reference speed which the driver sets and which, during the journey, the vehicle's control system is expected to hold within a range bounded by two speeds $v_{min}$ and $v_{max}$ which may be set manually by the driver or be set automatically by calculations of suitable ranges in the system. According to an embodiment of the invention, the computing unit is adapted to adjust the control signal $v_{setkorr}$ within the desired speed value limits $v_{min}$ and $v_{max}$. There is thus no risk of exceeding the limits set.

According to an embodiment, the computing unit is adapted to calculate an adjusted control signal $v_{setkorr}$ to an ECC system in the vehicle so that said time difference disappears, which ECC system uses map data and position data concerning the itinerary. Thus the system according to the invention can also be used when an ECC system is used to regulate the vehicle's speed. The computing unit can then receive information from the ECC system in order to correctly calculate $v_{setkorr}$ to the ECC system.

When an ECC system uses advance information (e.g. a "look-ahead" system), the vehicle is provided with a positioning system and map information, and position data from the positioning system and topology data from the map information are used to construct a horizon that describes the nature of the itinerary. For example, GPS (Global Positioning System) may be used to determine position data for the vehicle, but it should be appreciated that other kinds of global or regional positioning systems are also conceivable to provide the vehicle with position data, e.g. systems which use a radio receiver to determine the vehicle's location. The vehicle may also use sensors to scan the surroundings and thereby determine its location. The horizon is divided into route segments, and by classifying coming segments, e.g. by gradient, and then regulating the vehicle's speed according to rules controlled by the classification and a number of other parameters, e.g. vehicle-specific parameters, an intelligent, comfortable and fuel-saving cruise control of the vehicle is achievable.

The invention also relates to a method for maintaining driving times for an adaptive cruise control comprising a cruise control regulator in a motor vehicle whose control system is regulated by the cruise control regulator. The method will now be described with reference to the flowchart in figure 3. The method comprises the steps of A) indicating desired speed values $v_{set}$ for the adaptive cruise control; B) identifying a section $S_i$ of a driven run S during which the driving time is to be determined; C) calculating the time $t_{cc}$ it would have taken to drive the section $S_i$ when using a conventional non-adaptive cruise control; D) determining the time $t_{adapt}$ actually taken to drive the section $S_i$ with the adaptive cruise control; E) calculating the time difference between $t_{cc}$ and $t_{adapt}$; F) calculating an adjusted control signal $v_{setkorr}$ to be used as control signal to the cruise control regulator, so that said time difference disappears as the vehicle continues its journey; $v_{setkorr}$ being used as control signal to the adaptive system's cruise control regulator. Using the method described provides a way to increase the acceptance of an adaptive cruise control system, by eliminating any difference in driving time. As a result, the driver will presumably continue to use the adaptive cruise control, and a fuel saving resulting from use of the adaptive cruise control system can be made.

According to an embodiment, the method comprises identifying the section $S_i$ by identifying the subsections SI-Sn of the driven run S where an engine output that is smaller than or equal to the maximum available engine output is sufficient to maintain the vehicle speed when using the adaptive cruise control, the section $S_i$ consisting of the identified subsections SI-Sn. A section $S_i$ can thus be arrived at and be used to correctly calculate a time $t_{cc}$ which it should have taken to drive the section $S_i$ with a conventional cruise control. The time $t_{cc}$ is estimated according to an embodiment by integration across the identified sections SI-Sn.

According to another embodiment, the method comprises registering information about the run S and identifying the section $S_i$ by using the information about the run S. For example, map data and positioning information can be used to obtain information about the run S, or else information about the run S may be registered by using sensors in order to detect road gradients, distance travelled, etc. The entire run S can then be identified and a conventional cruise control can be simulated during the run. The time $t_{cc}$ actually taken to drive the vehicle for the distance S can then be calculated.

The method according to the invention is preferably repeated continuously in order to be able to calculate an adjusted control signal $v_{setkorr}$ to the cruise control regulator. In this way, new calculated time differences can be continuously eliminated as the journey proceeds, and the difference between the driving times with the different cruise controls can be kept to a minimum or may disappear entirely by the time the vehicle reaches its final destination.

According to an embodiment of the method according to the invention, the adjusted control signal $v_{setkorr}$ is calculated so that the time difference disappears over a predetermined time. According to another embodiment, the adjusted control signal $v_{setkorr}$ is calculated so that the time difference disappears over a predetermined distance. The driver or the system can set a time or a distance over which the time difference is to disappear, and after that time or distance the control signal to the adaptive system's cruise control regulator will no longer be adjusted unless a new time difference is calculated.

The control signal $v_{setkorr}$ is preferably adjusted within the desired speed value limits $v_{min}$ and $v_{max}$. As a result, the vehicle's speed will not vary beyond the limits, which might otherwise both irritate the driver and result in speed limits being exceeded.

Using an ECC system to regulate the vehicle's speed makes it possible for the nature of the coming topology to be taken into account when the speed is to be determined. The method according to the invention can then, according to an embodiment, calculate a control signal $v_{setkorr}$ to the ECC system in the vehicle so that said time difference disappears. An ECC system such as a "look-ahead" system uses in a conventional way map data and position data for the itinerary, which can be obtained in various ways.

The invention relates also to a computer programme product which comprises computer programme instructions for enabling a computer system in a vehicle to perform the steps according to the method described above when the computer programme instructions are run on said computer system. According to an embodiment the computer programme instructions are stored on a medium which is readable by a computer system.

The present invention is not limited to the embodiments described above. Various alternatives, modifications and equivalents may be used. The aforesaid embodiments therefore do not limit the scope of the invention, which is defined by the attached claims.

**Claims**

1. An adaptive cruise control system for maintaining driving times, the system comprising a cruise control regulator for regulating the cruise control of a motor vehicle, **characterised in that** the system for maintaining driving times comprises:

- an input unit for indicating desired speed values $v_{set}$ for the adaptive cruise control; and
- a computing unit adapted to

- identify a section $S_i$ of a driven run S during which the driving time is to be determined;
- calculate the time $t_{cc}$ it would have taken to drive the section $S_i$ when using a conventional non-adaptive cruise control;
- determine the time $t_{adapt}$ actually taken to drive the section $S_i$ with the adaptive cruise control;
- calculate the time difference between $t_{cc}$ and $t_{adapt}$;
- calculate an adjusted control signal $v_{setkorr}$ to be used as control signal to the cruise control regulator so that said time difference disappears as the vehicle continues its journey; $v_{setkorr}$ being used as control signal to the adaptive system's cruise control regulator.

2. A system according to claim 1, in which the computing unit is adapted to identify the section $S_i$ by identifying the subsections S1-Sn of the driven run S where an engine output smaller than or equal to the maximum available engine output is sufficient to maintain the vehicle speed when using the adaptive cruise control, which section $S_i$ consists of the identified subsections S1-Sn.

3. A system according to claim 1, in which the system is adapted to register information about the run S and the computing unit is adapted to identify the section $S_i$ by using the information about the run S.

4. A system according to any one of claims 1 to 3, in which the computing unit is adapted to calculate the adjusted control signal $v_{setkorr}$ so that the time difference disappears over a predetermined time.

5. A system according to any one of claims 1 to 3, in which the computing unit is adapted to calculate the adjusted control signal $v_{setkorr}$ so that the time difference disappears over a predetermined distance.

6. A system according to any one of the foregoing claims, in which the computing unit is adapted to adjust the control signal $v_{setkorr}$ within the desired speed value limits $v_{min}$ and $v_{max}$.

7. A system according to any one of the foregoing claims, in which the computing unit is adapted to calculate an adjusted control signal $v_{setkorr}$ to an ECC (Economic Cruise Control) system in the vehicle so that said time difference disappears, which ECC system uses map data and position data about the itinerary.

8. A system according to claim 2, in which the computing unit is adapted to estimate the time $t_{cc}$ by integration across the identified sections S1-Sn.

9. An adaptive cruise control method for maintaining driving times of a motor vehicle whose control system is regulated by a cruise control regulator, **characterised by** the steps of:

A) indicating desired speed values $v_{set}$ for the adaptive cruise control;
B) identifying a section $S_i$ of a driven run S during which the driving time is to be determined;
C) calculating the time $t_{cc}$ it would have taken to drive the section $S_i$ when using a conventional non-adaptive cruise control;
D) determining the time $t_{adapt}$ actually taken to drive the section $S_i$ with the adaptive cruise control;
E) calculating the time difference between $t_{cc}$ and $t_{adapt}$; and
F) calculating an adjusted control signal $v_{setkorr}$ to be used as control signal to the cruise control regulator so that said time difference disappears as the vehicle continues its journey; $v_{setkorr}$ being used as control signal to the adaptive system's cruise control regulator.

10. A method according to claim 9, in which the method comprising identifying the section $S_i$ by identifying the subsections S1-Sn of the driven run S where an engine output smaller than or equal to the maximum available engine output is sufficient to maintain the vehicle speed when using the adaptive cruise control, which section $S_i$ consists of the identified subsections S1-Sn.

11. A method according to claim 9, in which the method comprises registering information about the section $S_i$ by using

the information about the run S and identifying the run S.

12. A method according to any one of claims 9 to 11, in which the adjusted control signal $v_{setkorr}$ is calculated so that the time difference disappears over a predetermined time.

13. A method according to any one of claims 9 to 11, in which the adjusted control signal $v_{setkorr}$ is calculated so that the time difference disappears over a predetermined distance.

14. A method according to any one of claims 9 to 13, in which the control signal $v_{setkorr}$ is adjusted within the desired speed value limits $v_{min}$ and $v_{max}$.

15. A method according to any one of claims 9 to 14, in which a control signal $v_{setkorr}$ to an ECC (Economic Cruise Control) system in the vehicle is calculated so that said time difference disappears, which ECC system uses map data and position data about the itinerary.

16. A method according to claim 10, in which the time $t_{cc}$ is estimated by integration across the identified sections S1-Sn.

17. A computer programme product comprising computer programme instructions for enabling a computer system in a vehicle to perform the steps according to the method according to any one of claims 9 to 16 when the computer programme instructions are run on said computer system.

18. A computer programme product according to claim 17, in which the computer programme instructions are stored on a medium which is readable by a computer system.

**Patentansprüche**

1. Adaptives Fahrgeschwindigkeitsregelsystem zur Aufrechterhaltung von Fahrzeiten, wobei das System einen Fahrgeschwindigkeitsregler zum Regeln der Fahrsteuerung eines Kraftfahrzeugs aufweist,
   **dadurch gekennzeichnet, dass** das System zur Aufrechterhaltung von Fahrzeiten aufweist:

   - eine Eingabeeinheit zum Angeben gewünschter Geschwindigkeitswerte $v_{set}$ für die adaptive Fahrsteuerung, und
   - eine Berechnungseinheit, die eingerichtet ist zum

      - Identifizieren eines Abschnitts $S_i$ einer gefahrenen Fahrstrecke S, während dessen die Fahrzeit ermittelt werden soll,
      - Berechnen der Zeit $t_{cc}$, die zum Fahren des Abschnitts $S_i$ unter Verwendung einer herkömmlichen, nicht adaptiven Fahrsteuerung benötigt worden wäre,
      - Ermitteln der tatsächlich zum Fahren des Abschnitts $S_i$ mit der adaptiven Fahrsteuerung benötigten Zeit $t_{adapt}$,
      - Berechnen der Zeitdifferenz zwischen $t_{cc}$ und $t_{adapt}$,

   - Berechnen eines als Steuersignal für den Fahrgeschwindigkeitsregler zu verwendenden, angepassten Steuersignals $v_{setkorr}$ solchermaßen, dass die Zeitdifferenz verschwindet, während das Fahrzeug seine Reise fortsetzt, wobei $v_{setkorr}$ als Steuersignal für den Fahrgeschwindigkeitsregler des adaptiven Systems verwendet wird.

2. System nach Anspruch 1, bei dem die Berechnungseinheit dazu eingerichtet ist, den Abschnitt $S_i$ durch Identifizieren der Unterabschnitte Sl-Sn der gefahrenen Fahrstrecke S zu identifizieren, in denen eine Antriebsleistung, die kleiner oder gleich der maximal verfügbaren Motorleistung ist, zum Aufrechterhalten der Fahrzeuggeschwindigkeit unter Verwendung der adaptiven Fahrsteuerung ausreichend ist, wobei der Abschnitt $S_i$ aus den identifizierten Unterabschnitten Sl-Sn besteht.

3. System nach Anspruch 1, bei dem das System dazu eingerichtet ist, Information über die Fahrstrecke S zu registrieren, und die Berechnungseinheit dazu eingerichtet ist, den Abschnitt $S_i$ durch Verwenden der Information über die Fahrstrecke S zu identifizieren.

4. System nach einem der Ansprüche 1 bis 3, bei dem die Berechnungseinheit dazu eingerichtet ist, das angepasste

Steuersignal $v_{setkorr}$ so zu berechnen, dass die Zeitdifferenz über eine vorgegebene Zeitdauer verschwindet.

5. System nach einem der Ansprüche 1 bis 3, bei dem die Berechnungseinheit dazu eingerichtet ist, das angepasste Steuersignal $v_{setkorr}$ so zu berechnen, dass die Zeitdifferenz über eine vorgegebene Wegstrecke verschwindet.

6. System nach einem der vorhergehenden Ansprüche, bei dem die Berechnungseinheit dazu eingerichtet ist, das Steuersignal $v_{setkorr}$ innerhalb der gewünschten Geschwindigkeitswertgrenzen $v_{min}$ und $v_{max}$ einzustellen.

7. System nach einem der vorhergehenden Ansprüche, bei dem die Berechnungseinheit dazu eingerichtet ist, ein angepasstes Steuersignal $v_{setkorr}$ für ein ECC (Ökonomisches Fahrsteuerungs-)System in dem Fahrzeug so zu berechnen, dass die Zeitdifferenz verschwindet, wobei das ECC-System Kartendaten und Positionsdaten über die Reiseroute verwendet.

8. System nach Anspruch 2, bei dem die Berechnungseinheit dazu eingerichtet ist, die Zeit $t_{cc}$ durch Integration über die identifizierten Abschnitte SI-Sn abzuschätzen.

9. Adaptives Fahrgeschwindigkeitsregelverfahren zur Aufrechterhaltung von Fahrzeiten eines Kraftfahrzeugs, dessen Steuersystem durch einen Fahrgeschwindigkeitsregler geregelt wird,
**gekennzeichnet durch** die Schritte:

A) Angeben gewünschter Geschwindigkeitswerte $v_{set}$ für die adaptive Fahrsteuerung,
B) Identifizieren eines Abschnitts $S_i$ einer gefahrenen Fahrstrecke S, während dessen die Fahrzeit ermittelt werden soll,
C) Berechnen der Zeit $t_{cc}$, die unter Verwendung einer herkömmlichen nicht adaptiven Fahrsteuerung zum Fahren des Abschnitts $S_i$ benötigt worden wäre,
D) Ermitteln der Zeit $t_{adapt}$, die zum Fahren des Abschnitts $S_i$ mit der adaptiven Fahrsteuerung tatsächlich benötigt worden ist,
E) Berechnen der Zeitdifferenz zwischen $t_{cc}$ und $t_{adapt}$, und
F) Berechnen eines als Steuersignal für den Fahrgeschwindigkeitsregler zu verwendenden, angepassten Steuersignals $v_{setkorr}$ solchermaßen, dass die Zeitdifferenz verschwindet, während das Fahrzeug seine Reise fortsetzt, wobei $v_{setkorr}$ als Steuersignal für den Fahrgeschwindigkeitsregler des adaptiven Systems verwendet wird.

10. Verfahren nach Anspruch 9, bei dem das Verfahren ein Identifizieren des Abschnitts $S_i$ durch Identifizieren der Unterabschnitte SI-Sn der gefahrenen Fahrstrecke S umfasst, in denen eine Antriebsleistung, die kleiner als oder gleich der maximal verfügbaren Motorleistung ist, zum Aufrechterhalten der Fahrzeuggeschwindigkeit unter Verwendung der adaptiven Fahrsteuerung ausreichend ist, wobei der Abschnitt $S_i$ aus den identifizierten Unterabschnitten SI-Sn besteht.

11. Verfahren nach Anspruch 9, bei dem das Verfahren ein Registrieren von Information über den Abschnitt $S_i$ durch Verwenden der Information über die Fahrstrecke S und Identifizieren der Fahrstrecke S umfasst.

12. Verfahren nach einem der Ansprüche 9 bis 11, bei dem das angepasste Steuersignal $v_{setkorr}$ so berechnet wird, dass die Zeitdifferenz über eine vorgegebene Zeitdauer verschwindet.

13. Verfahren nach einem der Ansprüche 9 bis 11, bei dem das angepasste Steuersignal $v_{setkorr}$ so berechnet wird, dass die Zeitdifferenz über eine vorgegebene Wegstrecke verschwindet.

14. Verfahren nach einem der Ansprüche 9 bis 13, bei dem das Steuersignal $v_{setkorr}$ innerhalb der gewünschten Geschwindigkeitswertgrenzen $v_{min}$ und $v_{max}$ eingestellt wird.

15. Verfahren nach einem der Ansprüche 9 bis 14, bei dem ein Steuersignal $v_{setkorr}$ für ein ECC (Ökonomisches Fahrsteuerungs-)System in dem Fahrzeug so berechnet wird, dass die Zeitdifferenz verschwindet, wobei das ECC-System Kartendaten und Positionsdaten über die Reiseroute verwendet.

16. Verfahren nach Anspruch 10, bei dem die Zeit $t_{cc}$ durch Integration über die identifizierten Abschnitte SI-Sn abgeschätzt wird.

17. Computerprogrammprodukt mit Computerprogrammanweisungen, die ein Computersystem in einem Fahrzeug in die Lage versetzen, die Schritte gemäß dem Verfahren nach einem der Ansprüche 9 bis 16 durchzuführen, wenn die Computerprogrammanweisungen auf dem Computersystem ausgeführt werden.

18. Computerprogrammprodukt nach Anspruch 17, in dem die Computerprogrammanweisungen auf einem Medium gespeichert sind, das von einem Computersystem lesbar ist.

## Revendications

1. Système de régulateur de vitesse adaptatif pour le maintien de temps de conduite, le système comprenant un régulateur de vitesse pour la régulation du régulateur de vitesse d'un véhicule motorisé,
**caractérisé en ce que** le système pour le maintien des temps de conduite comprend :

- une unité d'entrée pour l'indication de valeurs de vitesse souhaitées $v_{set}$ pour le régulateur de vitesse adaptatif ; et - une unité informatique adaptée pour

- identifier une section $S_i$ d'un parcours de conduite S durant laquelle le temps de conduite doit être déterminé ;
- calculer le temps $t_{cc}$ qui aurait été nécessaire pour parcourir la section $S_i$ lors de l'utilisation d'un régulateur de vitesse conventionnel non adaptatif ;
- déterminer le temps $t_{adapt}$ nécessaire actuellement pour parcourir la section $S_i$ avec le régulateur de vitesse adaptatif ;
- calculer la différence temporelle entre $t_{cc}$ et $t_{adapt}$
- calculer un signal de commande ajusté $V_{setkorr}$ à utiliser comme signal de commande sur le régulateur de vitesse afin que ladite différence de temps disparaisse lorsque le véhicule continue son trajet ; $V_{setkorr}$ étant utilisé comme signal de commande sur le régulateur de vitesse du système adaptatif.

2. Système selon la revendication 1, dans lequel l'unité informatique est adaptée pour identifier la section $S_i$ par l'identification des sous-sections S1-Sn du parcours de conduite S où une puissance moteur inférieure ou égale à la puissance moteur disponible maximale est suffisante pour maintenir la vitesse du véhicule lors de l'utilisation du régulateur de vitesse adaptatif, laquelle section $S_i$ se compose des sous-sections identifiées SI-Sn.

3. Système selon la revendication 1, dans lequel le système est adapté pour enregistrer des informations sur le parcours S et l'unité informatique est adaptée pour identifier la section $S_i$ à l'aide des informations à propos du parcours S.

4. Système selon l'une quelconque des revendications 1 à 3, dans lequel l'unité informatique est adaptée pour calculer le signal de commande ajusté $V_{setkorr}$ afin que la différence de temps disparaisse sur une durée prédéterminée.

5. Système selon l'une quelconque des revendications 1 à 3, dans lequel l'unité informatique est adaptée pour calculer le signal de commande ajusté $V_{setkorr}$ afin que la différence de temps disparaisse sur une distance prédéterminée.

6. Système selon l'une quelconque des revendications précédentes, dans lequel l'unité informatique est adaptée pour ajuster le signal de commande $V_{setkorr}$ dans les limites de valeur de vitesse souhaitées $V_{min}$ et $V_{max}$.

7. Système selon l'une quelconque des revendications précédentes, dans lequel l'unité informatique est adaptée pour calculer un signal de commande ajusté $V_{setkorr}$ à un système ECC (régulateur de vitesse économique) dans le véhicule afin que ladite différence de temps disparaisse, lequel système ECC utilise des données cartographiques et des données de position à propos de l'itinéraire.

8. Système selon la revendication 2, dans lequel l'unité informatique est adaptée pour estimer le temps $t_{cc}$ par intégration à travers les sections SI-Sn identifiées.

9. Un procédé de régulateur de vitesse adaptatif pour le maintien des temps de conduite d'un véhicule motorisé dont le système de commande est régulé par un régulateur de vitesse,

A) l'indication des valeurs de vitesse souhaitées $v_{set}$ pour le régulateur de vitesse adaptatif ;
B) l'identification d'une section $S_i$ d'un parcours de conduite S durant lequel le temps de conduite doit être déterminé ;

C) le calcul du temps $t_{cc}$ qui aurait été nécessaire pour parcourir la section $S_i$ lors de l'utilisation d'un régulateur de vitesse conventionnel non adaptatif ;
D) la détermination du temps $t_{adapt}$ nécessaire actuellement pour parcourir la section $S_i$ avec le régulateur de vitesse adaptatif ;
E) le calcul de la différence de temps entre $t_{cc}$ et $t_{adapt}$, et
F) le calcul d'un signal de commande ajusté $V_{setkorr}$ à utiliser comme signal de commande sur le régulateur de vitesse afin que ladite différence de temps disparaisse lorsque le véhicule continue son trajet ; $V_{setkorr}$ étant utilisé comme signal de commande sur le régulateur de vitesse du système adaptatif.

**10.** Procédé selon la revendication 9, dans lequel le procédé comprenant l'identification de la section Si par l'identification des sous-sections SI-Sn du parcours de conduite S où une puissance moteur inférieure ou égale à la puissance moteur disponible maximale est suffisante pour maintenir la vitesse du véhicule lors de l'utilisation du régulateur de vitesse adaptatif, laquelle section $S_i$ se compose des sous-sections identifiées SI-Sn.

**11.** Procédé selon la revendication 9, dans lequel le procédé comprend l'enregistrement d'informations sur la section $S_i$ à l'aide des informations à propos du parcours S et de l'identification du parcours S.

**12.** Procédé selon l'une quelconque des revendications 9 à 11, dans lequel le signal de commande ajusté *vsetkorr* est calculé afin que la différence de temps disparaisse sur une durée prédéterminée.

**13.** Procédé selon l'une quelconque des revendications 9 à 11, dans lequel le signal de commande ajusté $V_{setkorr}$ est calculé afin que la différence de temps disparaisse sur une distance prédéterminée.

**14.** Procédé selon l'une quelconque des revendications 9 à 13, dans lequel le signal de commande $V_{setkorr}$ est ajusté dans les limites de valeur de vitesse souhaitées $V_{min}$ et $V_{max}$.

**15.** Procédé selon l'une quelconque des revendications 9 à 14, dans lequel un signal de commande $V_{setkorr}$ à un système ECC (régulateur de vitesse économique) dans le véhicule est calculé afin que ladite différence de temps disparaisse, lequel système ECC utilise des données cartographiques et des données de position à propos de l'itinéraire.

**16.** Procédé selon la revendication 10, dans lequel le temps $t_{cc}$ est estimé par intégration à travers les sections SI-Sn identifiées.

**17.** Produit de programme informatique comprenant des instructions de programme informatique pour permettre à un système informatique dans un véhicule d'exécuter les étapes selon le procédé selon l'une quelconque des revendications 9 à 16 lorsque les instructions de programme informatique sont exécutées sur ledit système informatique.

**18.** Produit de programme informatique selon la revendication 17, dans lequel les instructions de programme informatique sont stockées sur un support qui est lisible par un système informatique.

FIG. 1

FIG. 2

SYSTEM

INPUT UNIT $V_{set}$

COMPUTING

UNIT

$V_{setkorr}$

CRUISE CONTROL
REGULATOR

CONTROL SYSTEM
FOR THE ENGINE

FIG. 3

INDICATE V$_{set}$ (A)

IDENTIFY SECTION S$_i$ (B)

CALCULATE TIME t$_{cc}$ (C)

DETERMINE TIME t$_{adapt}$ (D)

CALCULATE TIME DIFFERENCE BETWEEN t$_{cc}$ AND t$_{adapt}$ (E)

CALCULATE ADJUSTED CONTROL SIGNAL V$_{setkorr}$ (F)

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005062276 A

- KR 1020070066168

**Non-patent literature cited in the description**

- **FROBERG et al.** Explicit Fuel Optimal Speed Profiles for Heavy Trucks on a Set of Topographic Road Profiles. *SAE Technical Paper Series,* 03 April 2006, vol. 1
- **HELLSTROM et al.** Look-ahead control for heavy trucks to minimize trip time and fuel consumption. *Control Engineering Practice,* 2009, vol. 17, 245-254

- **HELLSTROM.** *Explicit use of road topography for model predictive cruise control in heavy trucks,* 21 February 2005, http://www.diva-portal.org/smash/get/diva2:20186/FULLTEXT01.pdf